# EUROPÄISCHE PATENTSCHRIFT

(11) **EP 3 667 019 B1**
(45) Veröffentlichungstag und Bekanntmachung des Hinweises auf die Patenterteilung: **21.07.2021**
(21) Anmeldenummer: 19215096.9
(22) Anmeldetag: 11.12.2019
(51) Int. Cl.: F01D 5/16, F16F 7/10

(54) **IMPULSKÖRPERMODULVERBUND, ZUGEHÖRIGE IMPULSKÖRPERMODULVERBUNDMENGE, GASTURBINENSCHAUFEL, VERWENDUNG EINES IMPULSKÖRPERMODULVERBUNDS UND VERFAHREN ZUM HERSTELLEN EINES IMPULSKÖRPERMODULVERBUNDS, EINER GASTURBINENSCHAUFEL UND EINER IMPULSKÖRPERMODULVERBUNDMENGE**
IMPULSE BODY MODULAR ASSEMBLY, CORRESPONDING PLURALITY OF IMPULSE BODY MODULAR ASSEMBLIES, GAS TURBINE BLADE, USE OF AN IMPULSE BODY MODULAR ASSEMBLY AND METHOD FOR MANUFACTURING AN IMPULSE BODY MODULAR ASSEMBLY, A GAS TURBINE BLADE AND A PLURALITY OF IMPULSE BODY MODULAR ASSEMBLIES
AGENCEMENT MODULAIRE DE CORPS D'IMPULSION, PLURALITÉ D'AGENCEMENTS MODULAIRES DE CORPS D'IMPULSION, AUBE DE TURBINE À GAZ, UTILISATION D'UN AGENCEMENT MODULAIRE DE CORPS D'IMPULSION, ET PROCÉDÉ POUR FABRIQUER UN AGENCEMENT MODULAIRE DE CORPS D'IMPULSION, UNE AUBE DE TURBINE À GAZ ET UNE PLURALITÉ D'AGENCEMENTS MODULAIRES DE CORPS D'IMPULSION

(30) Priorität: 13.12.2018 DE 102018221668
(43) Veröffentlichungstag der Anmeldung: 17.06.2020
(73) Patentinhaber: MTU Aero Engines AG, 80995 München (DE)
(72) Erfinder: Richter, Karl-Hermann, 80995 München (DE); Hanrieder, Herbert, 80995 München (DE); Gerloff, Steffen, 80995 München (DE)

(56) Entgegenhaltungen:
- EP-A1- 2 484 870
- EP-A1- 3 023 584
- EP-A1- 3 138 996
- EP-A1- 3 196 413
- EP-A1- 3 219 916
- EP-A1- 3 219 917
- EP-A1- 3 239 461
- EP-A1- 3 241 995
- EP-A1- 3 244 008
- EP-A1- 3 315 718
- WO-A1-2012/095067
- WO-A1-2017/220058
- US-A- 2 999 669

## Beschreibung

Die vorliegende Erfindung betrifft einen Impulskörpermodulverbund, eine Impulskörpermodulverbundmenge, eine Gasturbinenschaufel mit dem Impulskörpermodulverbund, eine Verwendung eines Impulskörpermodulverbunds oder einer Impulskörpermodulverbundmenge, ein Verfahren zum Herstellen eines Impulskörpermodulverbunds oder einer Gasturbinenschaufel, und ein Verfahren zum Herstellen einer Impulskörpermodulverbundmenge.

Insbesondere aus der eigenen EP 3 219 916 A1 sind schachtelartige Impuls-Verstimmbauteile bekannt, deren Gehäuse mehrere Kavitäten aufweisen, in denen jeweils Impulskörper angeordnet sind, um Schwingungen von Gasturbinenschaufeln zu reduzieren. Dem liegt ein insbesondere in der eigenen WO 2012/095067 A1, auf die ergänzend Bezug genommen wird, vorgestelltes Konzept zur Schwingungsreduktion durch Stoßkontakte zwischen den Impulskörpern und Kavitäten zugrunde. Diese eierschachtelartigen Impuls-Verstimmbauteile sind jedoch in der Herstellung aufwändig, bauen relativ groß und müssen je nach gewünschter Anzahl der Impulskörper jeweils spezifisch hergestellt werden.

Eine Aufgabe einer Ausführung der vorliegenden Erfindung ist es, eine Reduzierung von Schwingungen von Gasturbinenschaufeln mittels Stoßkontakten zwischen Impulskörpern und Kavitäten zu verbessern und/oder einen oder mehrere der vorgenannten Nachteile zu reduzieren, insbesondere die Herstellung gattungsgemäßer bzw. funktionsgleicher Impuls-Verstimmbauteile zu verbessern.

Diese Aufgabe wird durch ein Impulskörpermodulverbund mit den Merkmalen des Anspruchs 1 gelöst. Ansprüche 8-9, 11-13 stellen eine Impulskörpermodulverbundmenge mit je wenigstens zwei hier beschriebenen Impulskörpermodulverbünden, eine Gasturbinenschaufel mit wenigstens einem hier beschriebenen Impulskörpermodulverbund, ein Verfahren zum Herstellen eines hier beschriebenen Impulskörpermodulverbunds bzw. einer hier beschriebenen Gasturbinenschaufel bzw. Impulskörpermodulverbundmenge sowie eine Verwendung eines hier beschriebenen Impulskörpermodulverbunds bzw. einer hier beschriebenen Impulskörpermodulverbundmenge unter Schutz. Vorteilhafte Ausführungsformen der Erfindung sind Gegenstand der Unteransprüche.

Nach einer Ausführung der vorliegenden Erfindung weist ein Impuls- bzw. Stimmkörpermodul für eine bzw. einer Gasturbinenschaufel ein, in einer Ausführung einstückig(hergestellt)es, Gehäuse auf, das eine Kavität aufweist, die vorliegend ohne Beschränkung der Allgemeinheit als erste Kavität bezeichnet wird und durch einen mit dem Gehäuse, in einer Ausführung stoffschlüssig, verbundenen ersten Deckel, in einer Ausführung luftdicht, verschlossen ist bzw. wird und in der ein einziger, in einer Ausführung kugel- oder zylinderförmiger, Impuls- bzw. (Ver)Stimmkörper, der vorliegend entsprechend ohne Beschränkung der Allgemeinheit als erster Impulskörper bezeichnet wird, mit Bewegungsspiel in wenigstens einer Stoßrichtung aufgenommen ist, die vorliegend entsprechend ohne Beschränkung der Allgemeinheit als erste Stoßrichtung bezeichnet wird.

Nach einer Ausführung der vorliegenden Erfindung weist das Gehäuse keine weitere Kavität auf, in der ein einziger weiterer Impulskörper mit Bewegungsspiel in wenigstens einer Stoßrichtung aufgenommen ist, wobei in einer Ausführung ein Winkel zwischen dieser und der ersten Stoßrichtung höchstens 45°, insbesondere höchstens 15°, in einer Ausführung höchstens 5° beträgt, die also insbesondere gleich der ersten Stoßrichtung sein kann.

Nach einer anderen Ausführung der vorliegenden Erfindung weist das Gehäuse nur eine einzige weitere Kavität auf, in der ein einziger, in einer Ausführung kugel- oder zylinderförmiger, weiterer Impulskörper mit Bewegungsspiel in wenigstens einer Stoßrichtung aufgenommen ist, wobei in einer Ausführung ein Winkel zwischen dieser und der ersten Stoßrichtung höchstens 45°, insbesondere höchstens 15°, in einer Ausführung höchstens 5° beträgt, die also insbesondere gleich der ersten Stoßrichtung sein kann.

In einer Ausführung ist bzw. wird die weitere Kavität durch einen mit dem Gehäuse, in einer Ausführung stoffschlüssig, verbundenen weiteren, insbesondere dem ersten Deckel, insbesondere in der ersten Stoßrichtung (gesehen), gegenüberliegenden, weiteren Deckel, in einer Ausführung luftdicht, verschlossen.

Somit wird nach einer Ausführung der vorliegenden Erfindung ein Impulskörpermodul mit genau einer Kavität oder genau zwei Kavitäten und jeweils einem darin aufgenommenen einzelnen Impulskörper zur Verfügung gestellt.

Dadurch kann in einer Ausführung, insbesondere im Vergleich zu dem eierschachtelartigen Impuls-Verstimmbauteil der EP 3 219 916 A1, der Herstellungsaufwand reduziert werden.

Der erste und/oder weitere Deckel wird bzw. ist in einer Ausführung mittels Schweißen, in einer Ausführung Strahlschweißen, insbesondere Laser-Beam- bzw. Laser-Strahl-Schweißen oder Electron-Beam- bzw. Elektronenstrahl-Schweißen, verbunden, wodurch in einer Ausführung eine besonders vorteilhafte, insbesondere luftdichte und/oder zuverlässige, stoffschlüssige Verbindung realisiert werden kann.

Durch den luftdichten Verschluss der Kavität(en) kann vorteilhaft der (jeweilige) Impulskörper geschützt, insbesondere eine Oxidation und/oder Korrosion des Impulskörpers und/oder der Kavität reduziert werden und/oder, eine - demgegenüber aufwändigere - Abdichtung einer Kavität der Gasturbinenschaufel, in der das Impulskörpermodul angeordnet wird, entfallen.

In einer Ausführung weist das Gehäuse wenigstens eine, insbesondere wenigstens zwei, in einer Ausführung wenigstens und/oder höchstens drei, insbesondere aufeinander senkrecht(stehend)e, Symmetrieebene(n) auf.

Das Gehäuse ist quader-, in einer Ausführung würfelförmig, insbesondere mit verrundeten Kanten.

Zusätzlich weist in einer Ausführung die erste Kavität wenigstens eine, insbesondere wenigstens zwei, in einer Ausführung wenigstens und/oder höchstens drei, insbesondere aufeinander senkrecht(stehend)e, Symmetrieebene(n) und/oder (eine) ge- bzw. verrundete Innenkontur(en) auf und/oder ist zylinder- oder quader-, in einer Ausführung würfelförmig, insbesondere mit verrundeten Kanten. Zusätzlich oder alternativ weist in einer Ausführung die weitere Kavität wenigstens eine, insbesondere wenigstens zwei, in einer Ausführung wenigstens und/oder höchstens drei, insbesondere aufeinander senkrecht(stehend)e, Symmetrieebene(n) und/oder (eine) ge- bzw. verrundete Innenkontur(en) auf und/oder ist zylinder- oder quader-, in einer Ausführung würfelförmig, insbesondere mit verrundeten Kanten.

Hierdurch kann in einer Ausführung jeweils, insbesondere in Kombination, die Fertigung des Gehäuses und/oder sein Zusammenschluss mit einem oder mehreren weiteren erfindungsgemäßen Impulskörpermodulen und/oder seine Anordnung an bzw. in der Gasturbinenschaufel und/oder die Stoßkontaktcharakteristik verbessert werden.

In einer Ausführung ist der erste Deckel und/oder der weitere Deckel formschlüssig an dem Gehäuse zentriert, in einer Ausführung weist der Deckel hierzu einen Flansch auf, der in die Kavität eingreift.

Hierdurch kann in einer Ausführung die Herstellung, insbesondere Abdichtung, des Impulskörpermoduls verbessert werden.

In einer alternativen Ausführung liegt der erste Deckel und/oder der weitere Deckel an dem Gehäuse flach bzw. ohne Formschluss auf.

Hierdurch kann in einer Ausführung die Herstellung des Deckels verbessert werden.

In einer Ausführung variiert eine Wandstärke der ersten Kavität und/oder eine Wandstärke der weiteren Kavität des Gehäuses (jeweils) um höchstens 25%, in einer Ausführung um höchstens 10%, insbesondere längs der jeweiligen bzw. ersten Stoßrichtung.

Hierdurch kann in einer Ausführung die Herstellung des Gehäuses und/oder die Stoßkontaktcharakteristik des Impulskörpermoduls verbessert werden.

Zusätzlich oder alternativ beträgt in einer Ausführung eine, insbesondere maximale, minimale oder mittlere, Wandstärke der ersten Kavität und/oder eine, insbesondere maximale, minimale oder mittlere, Wandstärke der weiteren Kavität (jeweils) wenigstens 1%, insbesondere wenigstens 2%, in einer Ausführung wenigstens 5%, und/oder höchstens 50%, insbesondere höchstens 25%, in einer Ausführung höchstens 10%, eines, insbesondere maximalen, minimalen oder mittleren, Durchmessers des darin aufgenommenen Impulskörpers.

Hierdurch kann in einer Ausführung die Stoßkontaktcharakteristik des Impulskörpermoduls (weiter) verbessert werden.

Zusätzlich oder alternativ beträgt in einer Ausführung ein, insbesondere maximales, minimales oder mittleres, Bewegungsspiel des ersten Impulskörpers in der ersten Kavität und/oder ein, insbesondere maximales, minimales oder mittleres, Bewegungsspiel des weiteren Impulskörpers in der weiteren Kavität in der (jeweiligen) Stoßrichtung wenigstens 1% , insbesondere wenigstens 2%, in einer Ausführung wenigstens 5%, und/oder höchstens 500% , insbesondere höchstens 200%, in einer Ausführung höchstens 100%, insbesondere höchstens 50%, des, insbesondere maximalen, minimalen oder mittleren, Durchmessers dieses Impulskörpers und/oder wenigstens das Doppelte, insbesondere wenigstens das Vierfache, in einer Ausführung wenigstens das Zehnfache, und/oder höchstens das Hundertfache, insbesondere höchstens das Fünfzigfache, in einer Ausführung höchstens das Zwanzigfache eines Bewegungsspiels in einer Führungsrichtung quer zu dieser Stoßrichtung.

Hierdurch kann in einer Ausführung die Stoßkontaktcharakteristik des Impulskörpermoduls (weiter) verbessert werden.

Wie bereits erwähnt, können durch hier beschriebene Impulskörpermodule vorteilhaft(e) Subeinheiten zur Verfügung gestellt werden, die je nach Bauraum und/oder Anforderung, insbesondere zu reduzierenden Schwingungsmoden, zu unterschiedlichen Impulskörpermodulverbünden zusammengestellt werden können. Entsprechend weist nach der vorliegenden Erfindung ein Impulskörpermodulverbund zwei oder mehr, in einer Ausführung baugleiche, der hier beschriebenen Impulskörpermodule auf, die zerstörungsfrei lösbar oder dauerhaft bzw. nur unter wenigstens teilweiser Zerstörung lösbar miteinander verbunden sind bzw. werden. In einer Ausführung sind bzw. werden diese Impulskörpermodule reibschlüssig, insbesondere durch Klemmen, formschlüssig, insbesondere mittels einem oder mehreren, in einer Ausführung schwalbenschwanzartigen, Vorsprüngen an wenigstens einem der beiden Impulskörpermodule, die in Aussparungen an dem anderen Impulskörpermodul eingreifen, und/oder stoffschlüssig, insbesondere durch Schweißen, Löten und/oder Kleben, insbesondere Metallkleben, und/oder mittels eines oder mehrerer Spannelemente miteinander verbunden. In einer Ausführung sind bzw. werden diese Impulskörpermodule in der ersten Stoßrichtung aufeinander oder quer zur ersten Stoßrichtung nebeneinander angeordnet.

Dadurch kann in einer Ausführung die Handhabung und/oder Befestigung verbessert und/oder die Stoßkontaktcharakteristik der Impulskörpermodule (weiter) verbessert werden.

Nach einer Ausführung der vorliegenden Erfindung sind die Impulskörpermodule des Impulskörpermodulverbunds in einer L-Form, in einer C-Form, in einer, insbesondere rechteckigen und/oder quadratischen, Ringform oder in einer Form, die aus zwei oder mehr derartiger Formen gebildet ist, angeordnet sind.

Diese Formen bieten Vorteile für bestimmte, jeweilige Schwingungsausprägungen an der Stelle der Platzierung, insbesondere für unterschiedliche Resonanzen und/oder Drehzahlen.

Die L-Form ist vorteilhaft für den Einsatz an Stellen, an denen nicht ausreichend Platz für die bekannte, integrale Boxanordnung zur Verfügung steht.

Die C-Form und Ringform bieten Vorteile bei einer Befestigung und können insbesondere bei einer Aufnahme ohne Stoffschluss eine Fixierung oder Verankerung auch im Stillstand ermöglichen, in dem es keine fliehkraftbedingte Fixierung gibt. Nach einer Ausführung der vorliegenden Erfindung weist eine Impulskörpermodulverbundmenge einen oder mehrere erste Impulskörpermodulverbünde, wie sie hier beschrieben sind, und einen oder mehrere zweite Impulskörpermodulverbünde, wie sie hier beschrieben sind, auf, wobei der bzw. die ersten Impulskörpermodulverbünde (jeweils) eine erste Anzahl hier beschriebener, in einer Ausführung baugleicher, Impulskörpermodule und der bzw. die zweiten Impulskörpermodulverbünde (jeweils) eine zweite Anzahl hier beschriebener, in einer Ausführung untereinander und/oder zu Impulskörpermodulen der ersten Impulskörpermodulverbünde baugleicher, Impulskörpermodule aufweist, insbesondere hieraus besteht, wobei die erste und zweite Anzahl voneinander verschieden sind.

Wie bereits erwähnt, können so in einer Ausführung Impulskörpermodule als Subeinheiten je nach Bauraum und/oder Anforderung, insbesondere zu reduzierenden Schwingungsmoden, zu unterschiedlichen Impulskörpermodulverbünden zusammengestellt und so mit geringem Herstellungsaufwand unterschiedliche Anzahlen an Stimmkörpern bzw. unterschiedliche Baugrößen zur Verfügung gestellt werden.

Nach einer Ausführung der vorliegenden Erfindung weist eine Gasturbinenschaufel, in einer Ausführung eine Turbinen- oder Verdichterlaufschaufel, wenigstens ein hier beschriebenes Impulskörpermodul bzw. wenigstens einen hier beschriebenen Impulskörpermodulverbund auf, das bzw. der in einer Ausführung an, insbesondere wenigstens teilweise in, einem Außendeckband oder Innendeckband angeordnet ist bzw. wird, in einer Ausführung in einer Kavität der Gasturbinenschaufel.

In einer Ausführung ist bzw. wird das Impulskörpermodul bzw. der Impulskörpermodulverbund reib-, form- und/oder stoffschlüssig und/oder mittels wenigstens eines Befestigungselements, insbesondere des wenigstens einen Spannelements, mit dem die Impulskörpermodule des Impulskörpermodulverbunds miteinander verbunden sind, oder auch eines Sicherungsblechs befestigt, das hierzu in einer Ausführung vorgebogen ist und/oder stoffschlüssig, insbesondere durch Punktschweißen, an der Gasturbinenschaufel befestigt ist bzw. wird.

Hierdurch kann in einer Ausführung die Handhabung und/oder Befestigung (weiter) verbessert und/oder die Stoßkontaktcharakteristik der Impulskörpermodule (weiter) verbessert werden.

In einer Ausführung ist bzw. wird die Kavität der Gasturbinenschaufel mit dem darin angeordneten Impulskörpermodul bzw. Impulskörpermodulverbund durch einen Verschlussdeckel verschlossen, der in einer Weiterbildung mit der Gasturbinenschaufel verschweißt, verlötet und/oder verklebt ist bzw. wird.

Hierdurch kann in einer Ausführung die Handhabung und/oder Befestigung (weiter) verbessert werden.

Zusätzlich oder alternativ ist das Impulskörpermodul bzw. der Impulskörpermodulverbund in einer Ausführung mit oder ohne Spiel in der Kavität der Gasturbinenschaufel angeordnet. Durch eine Anordnung mit Spiel kann in einer Ausführung die Stoßkontaktcharakteristik (weiter) verbessert werden, durch eine spielfreie Anordnung in einer Ausführung eine Zuverlässigkeit.

In einer Ausführung wird bzw. ist die erste Kavität und/oder die weitere Kavität (jeweils) mittels, insbesondere spanendem und/oder elektrischem, Materialentfernen hergestellt, in einer Ausführung mittels Drehen, Fräsen, Electro-Chemical Machining (ECM) oder Electro-Discharge Machining (Sinking-EDM).

In einer Ausführung wird bzw. ist die erste Kavität und/oder die weitere Kavität (jeweils) mittels Umformen, insbesondere Fließpressen, in einer Ausführung Kalt-, Halbwarm- oder Warmfließpressen hergestellt, in einer Ausführung werden bzw. sind die erste Kavität und die weitere Kavität gemeinsam mittels (gleichzeitigem) Umformen, in einer Ausführung Vorwärts-Rückwärts-Napffließpressen bzw. durch mehrere gleichzeitig auf ein Halbzeug einwirkende Stempel, hergestellt.

Hierdurch kann in einer Ausführung ein vorteilhaftes, insbesondere stabile(re)s und/oder steife(re)s, Gehäuse hergestellt und/oder die Stoßkontaktcharakteristik (weiter) verbessert werden.

In einer Ausführung wird bzw. ist das Gehäuse aus Stangenmaterial hergestellt.

Hierdurch kann in einer Ausführung ein vorteilhaftes, insbesondere stabile(re)s und/oder steife(re)s, Gehäuse hergestellt und/oder die Stoßkontaktcharakteristik (weiter) verbessert werden.

Die erste Kavität und/oder die weitere Kavität ist in einer Ausführung zylinder- oder quaderförmig, insbesondere mit verrundeten Kanten.

Dadurch kann in einer Ausführung die Stoßkontaktcharakteristik (weiter) verbessert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Impulskörpermodul nach einer Ausführung der vorliegenden Erfindung in einem Schnitt längs einer Stoßrichtung;
- Fig. 2: ein Impulskörpermodul nach einer weiteren Ausführung der vorliegenden Erfindung in Fig. 1 entsprechender Darstellung;
- Fig. 3: einen Impulskörpermodulverbund nach einer Ausführung der vorliegenden Erfindung in Fig. 1 entsprechender Darstellung;
- Fig. 4: einen Impulskörpermodulverbund nach einer weiteren Ausführung der vorliegenden Erfindung in Fig. 3 entsprechender Darstellung;
- Fig. 5: eine Gasturbinenschaufel mit einem Impulskörpermodulverbund nach einer Ausführung der vorliegenden Erfindung in einem Teilschnitt
- Fig. 6: ein Impulskörpermodul nach einer weiteren Ausführung der vorliegenden Erfindung in Fig. 1 entsprechender Darstellung;
- Fig. 7: eine Gasturbinenschaufel mit einem Impulskörpermodulverbund nach einer weiteren Ausführung der vorliegenden Erfindung in Fig. 5 entsprechender Darstellung; und
- Fig. 8: Impulskörpermodulverbünde mit verschiedenen Formen nach einer weiteren Ausführung der vorliegenden Erfindung.

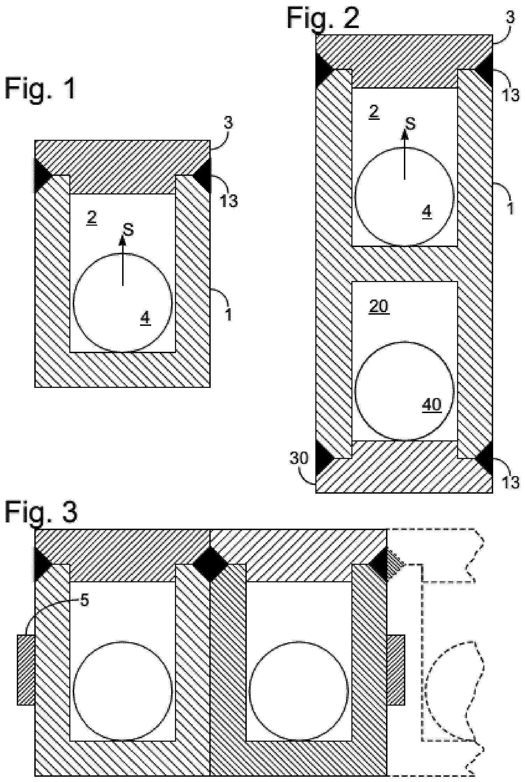

Fig. 1 zeigt ein Impulskörpermodul nach einer Ausführung der vorliegenden Erfindung in einem Schnitt längs einer ersten Stoßrichtung S.

Das Impulskörpermodul weist ein einstückiges Gehäuse 1 mit einer ersten, einzigen Kavität 2 auf, die durch einen mit dem Gehäuse 1 durch eine Rundschweißnaht 13 stoffschlüssig verbundenen ersten Deckel 3 luftdicht verschlossen ist und in der ein erster, einziger Impulskörper 4 mit Bewegungsspiel in der ersten Stoßrichtung S aufgenommen ist.

Das Gehäuse ist quaderförmig, und weist entsprechend mehrere Symmetrieebenen auf.

Der erste Deckel 3 ist durch einen Bund formschlüssig an dem Gehäuse 1 zentriert, der in die Kavität 2 eingreift.

Fig. 2 zeigt in Fig. 1 entsprechender Darstellung ein Impulskörpermodul nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 2 weist das Gehäuse eine einzige weitere Kavität 20 auf, in der ein einziger weiterer Impulskörper 40 mit Bewegungsspiel in der ersten Stoßrichtung S aufgenommen ist und die durch einen durch eine weitere Rundschweißnaht 13 stoffschlüssig mit dem Gehäuse 1 verbundenen weiteren, dem ersten Deckel 3 gegenüberliegenden, weiteren Deckel 30 luftdicht verschlossen ist.

Die beiden Kavitäten 2, 20 sind bzw. werden gemeinsam durch Vorwärts-Rückwärts-Napffließpressen umgeformt, in einer alternativen Ausführung durch spanende bzw. abtragende Verfahren gefertigt.

Fig. 3 zeigt einen Impulskörpermodulverbund nach einer Ausführung der vorliegenden Erfindung in Fig. 1 entsprechender Darstellung. Einander entsprechende Merkmale sind weiterhin durch identische Bezugszeichen identifiziert, so dass auf die vorstehende Beschreibung Bezug genommen wird.

Der Impulskörpermodulverbund der Fig. 3 besteht aus zwei der Impulskörpermodule, wie sie vorstehend mit Bezug auf Fig. 1 erläutert wurden. Diese sind bzw. werden quer zu der ersten Stoßrichtung nebeneinander angeordnet und durch ein Spannband 5 miteinander verbunden.

Wie in Fig. 3 gestrichelt angedeutet, kann ein Impulskörpermodulverbund auch noch weitere, insbesondere baugleiche Impulskörpermodule aufweisen. Insbesondere kann der aus zwei oder mehr Impulskörpermodulen bestehende Impulskörpermodulverbund der Fig. 3 ein erster Impulskörpermodulverbund sein und ein gleichartig aufgebauter zweiter Impulskörpermodulverbund eine hiervon verschiedene Anzahl der gleichen Impulskörpermodule aufweisen. Mit diesen unterschiedlichen Impulskörpermodulverbünden können unterschiedliche Gasturbinenschaufeln bestückt werden.

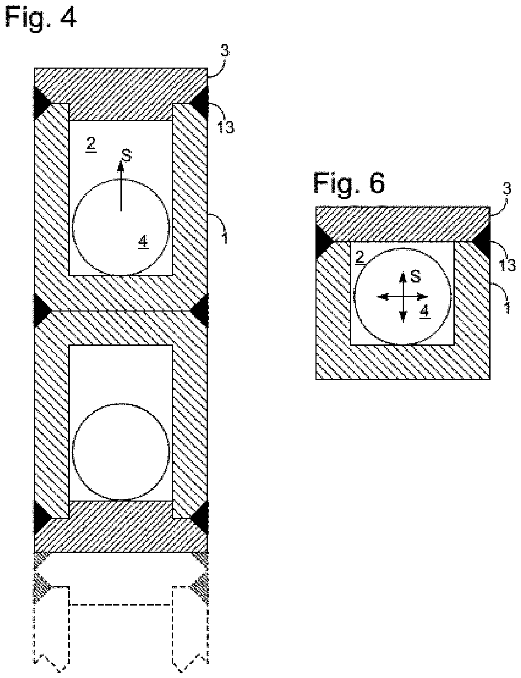

Fig. 4 zeigt in Fig. 3 entsprechender Darstellung einen Impulskörpermodulverbund nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 4 sind bzw. werden zwei oder - wie wiederum gestrichelt angedeutet - mehr der Impulskörpermodule, wie sie vorstehend mit Bezug auf Fig. 1 erläutert wurden, in der ersten Stoßrichtung aufeinander angeordnet und durch Schweißen, Löten, Kleben, Klemmen oder dergleichen miteinander zu dem Impulskörpermodulverbund verbunden.

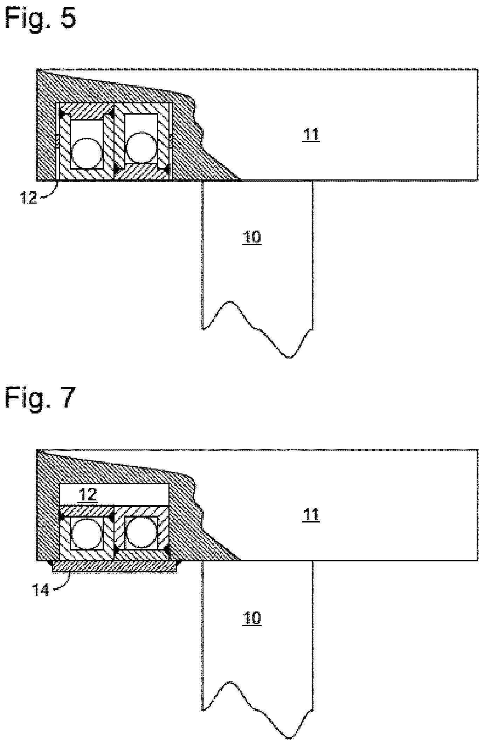

Fig. 5 zeigt eine Gasturbinenschaufel 10 mit einem Impulskörpermodulverbund nach einer Ausführung der vorliegenden Erfindung in einem Teilschnitt.

Dieser Impulskörpermodulverbund entspricht im Prinzip der Ausführungen nach Fig. 3, wobei jedoch die beiden Impulskörpermodule gegeneinander um 180° verdreht sind, um die realisierbare Variantenvielfalt zu illustrieren.

Der Impulskörpermodulverbund ist in einer Kavität 12 eines Außendeckbands 11 der Gasturbinenschaufel 10 angeordnet und durch das Spannband 5 reibschlüssig darin befestigt, das somit vorteilhaft eine Doppelfunktion erfüllt und gleichzeitig als Federelement zur Befestigung des Impulskörpermodulverbunds an der Gasturbinenschaufel dient.

Fig. 6 zeigt in Fig. 1 entsprechender Darstellung ein Impulskörpermodul nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 6 ist die Kavität 2 würfelförmig mit ver- bzw. gerundeten Kanten bzw. Innenkonturen, wobei eine der drei Symmetrieebenen die erste Stoßrichtung definiert.

Der Deckel 3 liegt flach bzw. ohne Formschluss auf dem Gehäuse 1 auf.

Fig. 7 zeigt in Fig. 5 entsprechender Darstellung eine Gasturbinenschaufel mit einem Impulskörpermodulverbund nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 7 ist die Kavität 12 durch einen Verschlussdeckel 14 verschlossen, der mit der Gasturbinenschaufel verschweißt, verlötet oder verklebt ist.

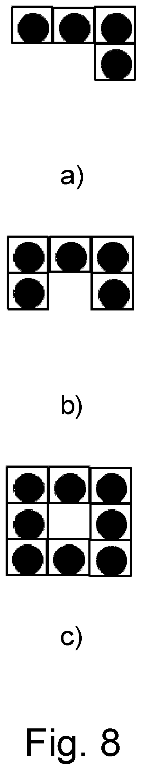

Fig. 8 zweigt drei verschiedene Ausführungen eines Impulskörpermodulverbunds, nämlich in einer L-Form (Fig. 8 a)), in einer C-Form (Fig. 8 b)) sowie in einer quadratischen Ringform (Fig. 8 c)).

Obwohl in der vorhergehenden Beschreibung exemplarische Ausführungen erläutert wurden, sei darauf hingewiesen, dass eine Vielzahl von Abwandlungen möglich ist.

So kann insbesondere statt des Impulskörpermoduls der Fig. 1 in den Ausführungen der Fign. 3- 5 auch jeweils das Impulskörpermodul der Fig. 2 verwendet werden.

Zusätzlich oder alternativ können insbesondere die Kavitäten jeweils würfelförmig, insbesondere mit ver- bzw. gerundeten Kanten bzw. Innenkonturen, ausgebildet sein, wie mit Bezug auf Fig. 6, 7 gezeigt bzw. erläutert.

Zusätzlich oder alternativ kann auch in der Ausführung der Fig. 6 der Verschlussdeckel 14 der Fig. 7 vorgesehen sein.

Insbesondere die Zusammenschau der Fign. 3- 5, 7 und 8 illustriert die Variantenvielfalt, die durch das Verbinden von erfindungsgemäßen Impulskörpermodulen zu erfindungsgemäßen Impulskörpermodulverbünden, insbesondere das Verbinden unterschiedlicher Anzahlen erfindungsgemäßer Impulskörpermodule zu unterschiedlichen Impulskörpermodulverbünden, bei gleichzeitig geringe(re)m Herstellungsaufwand zur Bestückung unterschiedlicher Gasturbinenschaufeln verwendet bzw. zur Verfügung gestellt werden kann.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Gehäuse
- 2: erste Kavität
- 3: erster Deckel
- 4: erster Impulskörper
- 5: Spannband
- 10: Gasturbinenschaufel
- 11: Außendeckband
- 12: Kavität
- 13: Rundschweißnaht
- 20: weitere Kavität
- 30: weiterer Deckel
- 40: weiterer Impulskörper

- S: erste Stoßrichtung

## Patentansprüche

1. Impulskörpermodulverbund mit wenigstens zwei Impulskörpermodulen für eine Gasturbinenschaufel (10), wobei die Impulskörpermodule zu dem Impulskörpermodulverbund zusammengestellt sind und jedes der Impulskörpermodule ein quaderförmiges Gehäuse (1) umfasst,
**dadurch gekennzeichnet, dass** das Gehäuse eine erste Kavität (2) aufweist, die durch einen mit dem Gehäuse verbundenen ersten Deckel (3) verschlossen ist und in der ein einziger erster Impulskörper (4) mit Bewegungsspiel in wenigstens einer ersten Stoßrichtung (S) aufgenommen ist, wobei das Gehäuse keine weitere oder nur eine einzige weitere Kavität (20) aufweist, in der ein einziger weiterer Impulskörper (40) mit Bewegungsspiel in wenigstens einer Stoßrichtung (S) aufgenommen ist, wobei die wenigstens zwei Impulskörpermodule zerstörungsfrei lösbar oder dauerhaft miteinander verbunden sind.

2. Impulskörpermodulverbund nach dem vorhergehenden Anspruch, **dadurch gekennzeichnet, dass** die weitere Kavität durch einen mit dem Gehäuse, insbesondere stoffschlüssig, verbundenen weiteren, insbesondere dem ersten Deckel gegenüberliegenden, weiteren Deckel (30), insbesondere luftdicht, verschlossen ist.

3. Impulskörpermodulverbund nach einem der vorhergehenden Ansprüche,
**dadurch gekennzeichnet, dass** die erste Kavität und/oder die weitere Kavität wenigstens eine Symmetrieebene aufweist, insbesondere zylinder- oder quaderförmig ist.

4. Impulskörpermodulverbund nach einem der vorhergehenden Ansprüche,
**dadurch gekennzeichnet, dass** der erste und/oder weitere Deckel formschlüssig an dem Gehäuse zentriert ist oder an dem Gehäuse flach aufliegt.

5. Impulskörpermodulverbund nach einem der vorhergehenden Ansprüche,
**dadurch gekennzeichnet, dass** eine Wandstärke der ersten und/oder weiteren Kavität des Gehäuses um höchstens 25% variiert und/oder wenigstens 1% und/oder höchstens 50% eines Durchmessers des darin aufgenommenen Impulskörpers beträgt.

6. Impulskörpermodulverbund nach einem der vorhergehenden Ansprüche,
**dadurch gekennzeichnet, dass** ein Bewegungsspiel des ersten und/oder weiteren Impulskörpers in der jeweiligen Stoßrichtung in der Kavität, in der er aufgenommen ist, wenigstens 1% und/oder höchstens 500% seines Durchmessers und/oder wenigstens das Doppelte und/oder höchstens das Hundertfache eines Bewegungsspiels in einer Führungsrichtung quer zu dieser Stoßrichtung beträgt.

7. Impulskörpermodulverbund nach einem der vorhergehenden Ansprüche,
**dadurch gekennzeichnet, dass** die Impulskörpermodule in einer L-Form, in einer C-Form, in einer, insbesondere rechteckigen und/oder quadratischen, Ringform oder in einer Form, die aus zwei oder mehr derartiger Formen gebildet ist, angeordnet sind.

8. Impulskörpermodulverbundmenge mit wenigstens einem ersten Impulskörpermodulverbund und wenigstens einem zweiten Impulskörpermodulverbund nach einem der vorhergehenden Ansprüche, wobei der erste Impulskörpermodulverbund und zweite Impulskörpermodulverbund unterschiedliche Anzahlen, insbesondere baugleicher, Impulskörpermodule aufweisen.

9. Gasturbinenschaufel (10), insbesondere Turbinen- oder Verdichterlaufschaufel, mit wenigstens einem, insbesondere an einem Außen- oder Innendeckband (11) angeordneten, Impulskörpermodulverbund nach einem der Ansprüche 1-7.

10. Gasturbinenschaufel nach dem vorhergehenden Anspruch, **dadurch gekennzeichnet, dass** der wenigstens eine Impulskörpermodulverbund in einer Kavität (12) der Gasturbinenschaufel angeordnet und/oder reib-, form- und/oder stoffschlüssig und/oder mittels wenigstens eines Befestigungselements, insbesondere des wenigstens einen Spannelements, befestigt ist.

11. Verwendung eines Impulskörpermodulverbunds nach einem der Ansprüche 1-7 zur Schwingungsreduktion einer Gasturbinenschaufel (10) nach einem der vorhergehenden Ansprüche 9-10, insbesondere einer Impulskörpermodulverbundmenge nach dem Anspruch 8 zur Schwingungsreduktion mehrerer Gasturbinenschaufeln nach einem der vorhergehenden Ansprüche 9-10.

12. Verfahren zum Herstellen eines Impulskörpermodulverbunds nach einem der Ansprüche 1 - 7 oder einer Gasturbinenschaufel (10) nach einem der Ansprüche 9 und 10, **dadurch gekennzeichnet, dass**
- die erste und/oder weitere Kavität (2; 20) eines jeweiligen Gehäuses (1) eines jeweiligen Impulskörpermoduls mittels, insbesondere spanendem und/oder elektrischem, Materialentfernen und/oder Umformen, insbesondere Fließpressen, hergestellt wird;
- das Gehäuse (1) aus Stangenmaterial hergestellt wird;
- die wenigstens zwei Impulskörpermodule zerstörungsfrei lösbar oder dauerhaft miteinander verbunden werden; und/oder
- der Impulskörpermodulverbund, in einer Kavität (12) der Gasturbinenschaufel angeordnet und/oder reib-, form- und/oder stoffschlüssig und/oder mittels wenigstens eines Befestigungselements, insbesondere des wenigstens einen Spannelements, befestigt wird.

13. Verfahren zum Herstellen einer Impulskörpermodulverbundmenge nach Anspruch 8 mit wenigstens einem ersten Impulskörpermodulverbund und wenigstens einem zweiten Impulskörpermodulverbund nach einem der Ansprüche 1 bis 7, wobei eine erste Anzahl von Impulskörpermodulen miteinander zu dem ersten Impulskörpermodulverbund und eine davon unterschiedliche zweite Anzahl von Impulskörpermodulen miteinander zu dem zweiten Impulskörpermodulverbund verbunden werden.

## Claims

1. Impulse body modular assembly comprising at least two impulse body modules for a gas turbine blade (10), the impulse body modules being combined to form the impulse body modular assembly and each of the impulse body modules comprising a cuboid housing (1), **characterized in that** the housing has a first cavity (2) which is closed by a first cover (3) connected to the housing and in which a single first impulse body (4) is received with movement play in at least one first impact direction (S), the housing has no further or only one further cavity (20) in which a single further impulse body (40) is received with play in at least one impact direction (S), the at least two impulse body modules being non-destructively detachable or permanently connected to one another.

2. Impulse body modular assembly according to the preceding claim, **characterized in that** the further cavity is closed, in particular in an airtight manner, by a further cover (30) which is connected, in particular integrally bonded, to the housing, a nd which is in particular opposite the first cover.

3. Impulse body modular assembly according to either of the preceding claims, **characterized in that** the first cavity and/or the further cavity has at least one plane of symmetry, which is in particular cylindrical or cuboid.

4. Impulse body modular assembly according to any of the preceding claims, **characterized in that** the first and/or further cover is centered in a form-fitting manneron the housing or rests flat on the housing.

5. Impulse body modular assembly according to any of the preceding claims, **characterized in that** a wall thickness of the first and/or further cavity of the housing varies by at most 25% and/or is at least 1 % and/or at most 50% of a diameter of the impulse body received therein.

6. Impulse body modular assembly according to any of the preceding claims, **characterized in that** a movement play of the first and/or further impulse body in the particular impact direction in the cavity in which it is received is at least 1 % and/or at most 500% of its diameter and/or at least twice and/or at most one hundred times the amount of movement play in a guide direction transverse to said impact direction.

7. Impulse body modular assembly according to any of the preceding claims, **characterized in that** the impulse body modules are arranged in an L-shape, in a C-shape, in a ring shape, in particular a rectangular and/or square ring shape, or in a shape which is formed from two or more such shapes.

8. Impulse body modular assembly comprising at least one first impulse body modular assembly and at least one second impulse body modular assembly according to any of the preceding claims, wherein the first impulse body modular assembly and second impulse body modular assembly have different numbers of impulse body modules, which are in particular structurally identical.

9. Gas turbine blade (10), in particular a turbine rotor blade or compressor rotor blade, comprising at least one impulse body modular assembly according to any of claims 1-7, which is arranged in particular on an outer or inner shroud (11).

10. Gas turbine blade according to the preceding claim, **characterized in that** the at least one impulse body modular assembly is arranged in a cavity (12) of the gas turbine blade and/or is frictionally and/orform-fittingly fastened and/or integrally bonded and/or fastened by means of at least one fastening element, in particular the at least one clamping element.

11. Use of an impulse body modular assembly according to any of claims 1-7 for reducing vibrations in a gas turbine blade (10) according to either of the preceding claims 9-10, in particular of an impulse body modular assembly according to claim 8 for reducing vibrations in a plurality of gas turbine blades according to either of the preceding claims 9-10.

12. Method for producing an impulse body modular assembly according to any of claims 1 -7 or a gas turbine blade (10) according to either claim 9 or claim 10, **characterized in that**
- the first and/or further cavity (2; 20) of a particular housing (1) of a particular impulse body module is produced by means of, in particular electrical, material removal and/or machining, in particular extrusion;
- the housing (1) is made of bar stock;
- the at least two impulse body modules are non-destructively detachably or permanently connected to one another; and/or
- the impulse body modular assembly is arranged in a cavity (12) of the gas turbine blade and/or is frictionally and/or form-fittingly fastened and/or integrally bonded and/or fastened by means of at least one fastening element, in particular the at least one clamping element.

13. Method for producing an impulse body modular assembly according to claim 8 comprising at least one first impulse body modular assembly and at least one second impulse body modular assembly according to any of claims 1 to 7, wherein a first number of impulse body modules are connected to one another to form the first impulse body modular assembly and a different second numberof impulse body modules are connected to one another to form the second impulse body modular assembly.

## Revendications

1. Agencement modulaire de corps d'impulsion comportant au moins deux modules de corps d'impulsion pour une aube de turbine à gaz (10), dans lequel les modules de corps d'impulsion sont combinés pour former l'agencement modulaire de corps d'impulsion et chacun des modules de corps d'impulsion comprend un boîtier (1) parallélépipédique, **caractérisé en ce que** le boîtier présente une première cavité (2) qui est fermée par un premier couvercle (3) relié au boîtier et dans laquelle un seul premier corps d'impulsion (4) avec jeu de mouvement dans au moins une première direction d'impact (S) est reçu, le boîtier n'en présentant pas d'autre ou présentant une seule autre cavité (20) dans laquelle un seul autre corps d'impulsion (40) avec jeu de mouvement dans au moins une direction d'impact (S) est reçu, les au moins deux modules de corps d'impulsion étant reliés ensemble de manière amovible non destructive ou en permanence.

2. Agencement modulaire de corps d'impulsion selon la revendication précédente, **caractérisé en ce que** l'autre cavité est fermée, en particulier de manière étanche à l'air, par un autre couvercle (30) relié au boîtier, en particulier par une liaison de matière, en particulier à l'opposé du premier couvercle.

3. Agencement modulaire de corps d'impulsion selon l'une des revendications précédentes, **caractérisé en ce que** la première cavité et/ou l'autre cavité présentent au moins un plan de symétrie, en particulier cylindrique ou parallélépipédique.

4. Agencement modulaire de corps d'impulsion selon l'une des revendications précédentes, **caractérisé en ce que** le premier et/ou l'autre couvercle sont centrés par une liaison de forme au niveau du boîtier ou reposent à plat au niveau du boîtier.

5. Agencement modulaire de corps d'impulsion selon l'une des revendications précédentes, **caractérisé en ce qu'**une épaisseur de paroi de la première et/ou de l'autre cavité du boîtier varie d'au plus 25 % et/ou représente au moins 1 % et/ou au plus 50 % d'un diamètre du corps d'impulsion reçu à l'intérieur de celui-ci.

6. Agencement modulaire de corps d'impulsion selon l'une des revendications précédentes, **caractérisé en ce qu'**un jeu de mouvement du premier et/ou de l'autre corps d'impulsion dans la direction d'impact respective dans la cavité dans laquelle il est reçu représente au moins 1 % et/ou au plus 500 % de son diamètre et/ou au moins deuxfois et/ou au plus cent fois le jeu de mouvement dans une direction de guidage transversale à ladite direction d'impact.

7. Agencement modulaire de corps d'impulsion selon l'une des revendications précédentes, **caractérisé en ce que** les modules de corps d'impulsion sont en forme de L, en forme de C, en forme d'anneau, en particulier rectangulaire et/ou carrée, ou se présentent sous une forme comprenant deuxou plusieurs desdites formes.

8. Pluralité d'agencements modulaires de corps d'impulsion comportant au moins un premier agencement modulaire de corps d'impulsion et au moins un second agencement modulaire de corps d'impulsion selon l'une des revendications précédentes, dans laquelle le premier agencement modulaire de corps d'impulsion et le second agencement modulaire de corps d'impulsion présentent des nombres différents de modules de corps d'impulsion, en particulier structurellement identiques.

9. Aube de turbine à gaz (10), en particulier aube mobile de turbine ou de compresseur, comportant au moins un agencement modulaire de corps d'impulsion selon l'une des revendications 1 à 7, qui est disposé en particulier au niveau d'une bande de recouvrement externe ou interne (11).

10. Aube de turbine à gaz selon la revendication précédente, **caractérisée en ce que** l'au moins un agencement modulaire de corps d'impulsion est disposé dans une cavité (12) de l'aube de turbine à gaz et/ou est fixé par friction, par liaison de forme et/ou par liaison de matière et/ou au moyen d'au moins un élément de fixation, en particulier d'au moins un élément de serrage.

11. Utilisation d'un agencement modulaire de corps d'impulsion selon l'une des revendications 1 à 7 pour la réduction des vibrations d'une aube de turbine à gaz (10) selon l'une des revendications 9 à 10 précédentes, en particulier d'un agencement modulaire de corps d'impulsion selon la revendication 8 pour la réduction des vibrations de plusieurs aubes de turbine à gaz selon l'une des revendications 9 à 10 précédentes.

12. Procédé de fabrication d'un agencement modulaire de corps d'impulsion selon l'une des revendications 1 à 7 ou d'une aube de turbine à gaz (10) selon l'une des revendications 9 et 10, **caractérisé en ce que**
- la première et/ou l'autre cavité (2 ; 20) d'un boîtier (1) respectif d'un module de corps d'impulsion respectif est fabriquée au moyen d'une extraction de matière et/ou d'une déformation, en particulier, par enlèvement de copeaux et/ou électrique, en particulier par extrusion ;
- le boîtier (1) est constitué d'un matériau en barre ;
- les au moins deux modules de corps d'impulsion sont reliés ensemble de manière amovible non destructive ou en permanence ; et/ou
- l'agencement modulaire de corps d'impulsion est disposé dans une cavité (12) de l'aube de turbine à gaz et/ou est fixé par friction, par liaison de forme et/ou par liaison de matière et/ou au moyen d'au moins un élément de fixation, en particulier d'au moins un élément de serrage.

13. Procédé de fabrication d'une pluralité d'agencements modulaires de corps d'impulsion selon la revendication 8, comportant au moins un premier agencement modulaire de corps d'impulsion et au moins un second agencement modulaire de corps d'impulsion selon l'une des revendications 1 à 7, un premier nombre de modules de corps d'impulsion étant reliés ensemble pour former le premier agencement modulaire de corps d'impulsion et un second nombre différent de modules de corps d'impulsion étant reliés ensemble pour former le second agencement modulaire de corps d'impulsion.
